(19) Europäisches Patentamt / European Patent Office / Office européen des brevets

(11) **EP 4 356 753 A1**

(12) **EUROPEAN PATENT APPLICATION**
published in accordance with Art. 153(4) EPC

(43) Date of publication:
**24.04.2024 Bulletin 2024/17**

(21) Application number: **21945955.9**

(22) Date of filing: **15.06.2021**

(51) International Patent Classification (IPC):
**A23L 5/10** (2016.01)    **A23L 7/157** (2016.01)
**A23L 29/256** (2016.01)

(52) Cooperative Patent Classification (CPC):
**A23L 5/10; A23L 7/157; A23L 29/256**

(86) International application number:
**PCT/JP2021/022722**

(87) International publication number:
**WO 2022/264277 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nisshin Seifun Welna Inc.**
**Tokyo 101-8441 (JP)**

(72) Inventors:
• **FUJIMURA Ryosuke**
  **Tokyo 103-8544 (JP)**
• **TSUJI Akito**
  **Tokyo 103-8544 (JP)**
• **SHIGEMATSU Toru**
  **Tokyo 103-8544 (JP)**

(74) Representative: **Forstmeyer, Dietmar**
**Boeters & Lieck**
**Oberanger 32**
**80331 München (DE)**

(54) **METHOD FOR MANUFACTURING HEATED FOOD**

(57) The present invention addresses the problem of providing a technique for easily preparing a heated food with a succulent texture while minimizing water loss due to heating. The method for producing a heated food of the present invention includes pretreating a food precursor susceptible to water exudation on heating by applying a composition containing a monovalent metal salt of alginic acid and a slightly water-soluble divalent metal salt to the food precursor and heating the pretreated food precursor. The method includes performing a gelling prevention measure to prevent the alginic acid in the composition from gelling after the pretreatment and before the heating. The gelling prevention measure includes controlling (1) the temperature of the food precursor immediately before applying the composition in the pretreatment at or below 30°C, (2) the time in which the temperature of the pretreated food precursor is 40°C or higher less than 2 hours, and (3) the time in which the temperature of the pretreated food precursor is in the range of from 10°C to 20°C less than 12 hours.

EP 4 356 753 A1

**Description**

Technical Field

The present invention relates to a method for preparing a heated food product by cooking a food precursor that exudes water when heated.

Background Art

Animal food ingredients, such as meat and seafood, are eaten as raw or heated (cooked). Their fresh textures and intense flavors are enjoyed when eaten raw. When they are cooked, on the other hand, their components undergo a chemical reaction or decomposition reaction to produce unique aromatic and tasty components that provide pleasing, complex and subtle flavors. Thus, animal foods that can be eaten in various ways are very popular. However, for raw consumption, they must be under strict hygienic control. When they are eaten cooked, on the other hand, high cooking techniques are required because the qualities of the cooked animal foods depend largely on the skill of cooks. Not only animal foods, but also ground (or minced) foods should have the hygiene control and quality deterioration problems because of their destroyed cells.

On heating animal food or ground food, muscle contraction occurs in many cases, which is accompanied by exudation of intercellular or intracellular water in the form of what we call drip, resulting in excessive loss of water (drip loss) of the food. If a food undergoes an excessive water loss due to heating, not only will the resulting cooked food product have a dry texture, providing less eating satisfaction, but a reduction in cooking yield due to weight loss is inevitable. In order to address the water loss problem associated with heating, skilled cooks minimize the water loss from food by appropriately controlling the heat, the temperature of the food being cooked, the heating rate, and so on. In addition, it has been conventionally practiced to attach a liquid seasoning like a sauce to a food ingredient or to apply a coating to the surface of an ingredient. However, as the use of a liquid seasoning is limited to specific dishes, the approach of attaching it to food has a limited range of application. Further, a coating applied to the surface of an ingredient does not always provide a sufficient protection against the water loss from the ingredient. The use of a coating can often lead to different problems, such as the coating bursting, resulting in a significant degradation in the quality of the heated food and mismatch of taste and flavor between the coating and the ingredient. Under the present situation, although various devices have been proposed and practiced to prevent water loss from food, each of them still has great room for improvement.

It is known that alginic acid has the property of gelling under certain conditions, and various food-related techniques using this property have been proposed.

Patent literature 1 listed below discloses a method for forming an edible coat on the surface of a food (ingredient) in the preparation of a coated food composed of an ingredient and a coating around the ingredient, such as deep-fried food, to enhance the binding between the ingredient and the coating. The method includes contacting an ingredient with a liquid containing alginic acid and then contacting the ingredient with a liquid containing a polyvalent metal salt.

Patent literature 2 discloses a process including providing a solid food that has been treated with an alkali, applying a coating containing propylene glycol alginate to the alkali-treated food, deep-frying the coated food to render the coating functional, and freezing the fried food. Patent literature 2 describes the thus prepared frozen fried food as having a good texture and, even after a lapse of time after cooking, being less likely to become hard and easy to eat.

Patent literature 3 discloses a method for preparing a deep-fried food including applying to an ingredient a liquid coating prepared from a liquid and a mix containing a monovalent metal alginate and a slightly soluble divalent metal salt and deep-frying the coated ingredient. Patent literature 3 describes the resulting fried food as having a non-dry, pleasant texture with a golden-brown coating.

Citation List

Patent Literature

Patent literature 1: JP 2015-23861A
Patent literature 2: JP 2015-23846A
Patent literature 3: JP 2019-195292A

Summary of Invention

The techniques according to patent literatures 1 to 3 are effective to a certain extent in improving the qualities of deep-fried food, but there is still room for improvement in minimizing water loss due to heating when an ingredient or a mixture of ingredients to be heated is an animal food, such as meat and seafood, or a ground food.

An object of the present invention is to provide a technique for easily preparing a heated food with a succulent texture while minimizing water loss of a food due to heating.

The method for producing a heated food includes pretreating a food precursor susceptible to water exudation on heating by applying a composition containing a monovalent metal salt of alginic acid and a slightly water-soluble divalent metal salt to the food precursor and heating the pretreated food precursor. The method includes performing a gelling prevention measure to prevent the alginic acid in the composition from gelling after completion of the pretreatment and before performing the heating. The gelling prevention measure includes controlling the temperature of the food precursor immediately before applying the composition thereto in the pretreatment at or below 30°C, controlling the time in which the temperature of the pretreated food precursor is 40°C or higher so as not to be 2 hours or more, and controlling the time in which the temperature of the pretreated food precursor is in the range of from 10°C to 20°C so as not to be 12 hours or more.

Description of Embodiments

The method of the present invention for producing a heated food includes at least a pretreatment step in which a specific composition (hereinafter described) is applied to a food precursor and a heating step in which the pretreated food precursor is heated.

The food precursor to be pretreated with the specific composition in the pretreatment step is a food that is susceptible to water exudation when heated. The water exudate from the food precursor is referred to as drip. Typically, drip contains intercellular soluble components, including proteins, extract, and vitamins.

The food precursor to be pretreated includes animal foods and granular foods. The food precursor to be pretreated is typically unheated but may have been heated provided that the specified effects of the present invention are produced.

The animal foods are food precursors that are sourced from animals, including meat, such as chicken, pork, beef, sheep, and goat; and seafood, such as squid, shrimp, and horse mackerel.

The granular foods are ground (or minced) or granulated products of raw foods, typically including aggregates of fragments of raw foods or granular proteins. Methods for making the granular foods are not particularly limited, including grinding or extruder granulation of raw foods. The size of the fragments can be decided as appropriate to the type of cooked food products to be produced. The general particle size of the granular food is preferably 0.5 to 12 mm, more preferably 0.8 to 9 mm, in terms of the opening size of the sieve through which they pass.

The granular foods are roughly divided into granular animal foods and granular plant foods. The granular animal foods are represented by a food precursor containing at least one of the above-recited animal foods in granular form (e.g., ground meat), such as a ground meat mixture to be shaped into hamburger steak patties. The granular plant foods are represented by textured soy protein products (meat alternatives). The plant foods include vegetables, peas, cereal flours, and mushrooms.

The present invention is especially beneficial to those food precursors from which a relatively large amount of water exudes on heating. Examples of such food precursors include animal foods derived from meat or cephalopods, such as squid, and granulated plant foods (such as textured soy protein products).

In the pretreatment step, a composition containing a monovalent metal alginate and a slightly water-soluble divalent metal salt, hereinafter also referred to as a specific composition, is applied to the food precursor.

As used herein, the term "monovalent metal alginate" is a salt between alginic acid and a monovalent metal. The monovalent metal alginate preferably includes at least one of sodium alginate and potassium alginate, with sodium alginate being more preferred.

Substances with properties similar to monovalent metal alginates and approved for use in food include alginic acid, polyvalent metal alginates, and propylene glycol alginate. According to the inventors' findings, the use of them in the specific composition does not produce the specified effect of the present invention, i.e., the inhibitory effect on water loss by heating, because it is difficult to control gelling of alginic acid and polyvalent metal alginates due to their low water solubility, and propylene glycol alginate hardly gels.

The content of the monovalent metal alginate in the specific composition is preferably 0.1 to 5 mass%, more preferably 0.5 to 3 mass%, relatively to the total mass (100 mass%) of the composition. Too small the content can fail to produce the full effect of the present invention. Too large the content can result in a tough texture of the resulting heated food.

The divalent metal salt, another essential component of the specific composition, must be slightly water-soluble.

As will be discussed below, it is necessary for alginic acid in the specific composition to gel during heating of the food precursor in order to ensure the effect of the present invention. If the divalent metal salt used in the specific composition is a water-soluble divalent metal salt, such as calcium chloride, gelling would occur prior to heating, and the desired effect of the present invention would not be achieved.

As used herein, the term "slightly water-soluble" means that the mass of a solute dissolved in 100 g of water at pH 7 and 20°C (solubility) is not more than 5 g/100 g water.

To obtain the predetermined effect of the present invention more reliably, it is preferred for the divalent metal salt used in the present invention to be insoluble or slightly soluble in at least neutral or alkaline water. More specifically, it is preferred for the divalent metal salt to have a solubility of 0.1 g or less in 100 g of water at pH 7 and 20°C. The solubility can be measured as follows.

Method for measuring solubility of metal salt

In a flask are placed 100 g of water at pH 7 and 2 g of a metal salt being tested. The flask is tightly closed and shaken in a thermostat at 20°C for 1 hour. The contents of the flask are filtered to collect the undissolved metal salt, which is dried and weighed. The weight (g) of the undissolved metal salt is subtracted from the original weight (2 g) to obtain the solubility of the metal salt.

Considering the edible use, the divalent metal salt that can be used in the present invention is preferably at least one of calcium and magnesium salts that have been taken in relatively high amounts. Calcium salts are more preferred. Solubilities of representative calcium salts and magnesium salts as measured by the above method are shown in Table 1.

Table 1

| Divalent Metal Salt | Solubility (g/100 g water) |
| --- | --- |
| Calcium carbonate | 0.00015 |
| Tricalcium phosphate | 0.002 |
| Calcium monohydrogen phosphate | 0.004303 |
| Calcium hydroxide | 0.173 |
| Calcium dihydrogen phosphate | 1.8 |
| Magnesium phosphate | 0.0002588 |
| Magnesium hydroxide | 0.0009628 |
| Magnesium oxide | 0.0086 |
| Magnesium carbonate | 0.039 |
| Calcium chloride | 74.5 |

To obtain the predetermined effect of the present invention more reliably, among the divalent metal salts listed in Table 1 preferred is at least one selected from calcium carbonate, tricalcium phosphate, calcium monohydrogen phosphate (these three are inclusively referred to as calcium salts), magnesium phosphate, magnesium hydroxide, magnesium oxide, and magnesium carbonate (these four are inclusively referred to as magnesium salts), all having the above-defined solubility of not more than 0.1 g/100 g water.

The content of the slightly water-soluble divalent metal salt in the specific composition is preferably 0.1 mass% or higher, more preferably 0.5 mass% or higher, relative to the total mass of the composition. Too small the content can fail to produce the full effect of the present invention, i.e., the inhibitory effect on water loss by heating. While there is no particular upper limit to the content, an extremely high content of the slightly soluble metal salt can result in adverse effects, such as a peculiar taste associated with the metal salt, reduced adhesion to the food precursor, and deteriorated texture of the cooked food. In view of this, the content of the slightly water-soluble divalent metal salt in the specific composition is preferably not more than 30 mass%, more preferably 20 mass% or lower, even more preferably 10 mass% or lower, relative to the total mass of the composition.

If desired, the specific composition may further contain other components commonly used in the preparation of cooked foods in addition to the monovalent metal alginate and slightly water-soluble divalent metal salt. Such other components include cereal flours, such as wheat flour (including strong, all-purpose, weak, and durum flours), rye flour, barley flour, and rice flour; native starches from potato, wheat, corn, waxy corn, tapioca, rice, etc.; modified starches derived from these native starches by one or more modification processes, such as oiling, pregelatinization, etherification, esterification, crosslinking, and oxidation; saccharides; seasonings, such as edible salt and powdered soy sauce; fats and oils; thickeners; proteins; leavening agents; and insoluble dietary fibers. These components can be used either individually or in combination of two or more thereof.

The other components are used in a total amount preferably of not more than 99.5 mass%, more preferably of 99 mass% or less, even more preferably of 98 mass% or less, relative to the total mass of the specific composition.

The form of the specific composition to be applied to a food precursor is not particularly limited and may be selected appropriately depending on the type of the food precursor, the method of cooking, and the like. The form may be powder or liquid, and is preferably liquid. The specific composition *per se* is typically in powder form at ambient temperature and pressure. The specific composition in powder form can be converted to a liquid by dissolution or dispersion in a liquid.

The liquid to be used to dissolve or disperse the specific composition therein is preferably an aqueous liquid. The aqueous liquid is generally water, but may be other than water, such as beaten egg, soup stock, broth, and oil. These liquids can be used individually or in combination thereof.

The amount of the liquid to be used in the preparation of the specific composition in liquid form is not particularly limited and decided appropriately according to the type of the food precursor, the method of cooking the food precursor, and the like. Preferably it is 50 to 500 parts, more preferably 80 to 400 parts, even more preferably 100 to 300 parts, by mass per 100 parts by mass of the specific composition in powder form.

In the pretreatment of a food precursor, the specific composition is applied to the food precursor by any established method chosen based on the food precursor type and the cooking method, for example, in the same manner as is used to apply common powdered coatings, such as dredging flours, dredge mixes, and breadcrumbs, as well as liquid coatings, such as marinades and batters. In the case when the specific composition is in powder form, for instance, it can be applied by sprinkling, dredging onto or kneading into the food precursor. In using the specific composition in liquid form, it can be applied by spraying or dipping as well as the above-mentioned application methods. If necessary, the food precursor may be seasoned before applying the specific composition to an extent that does not interfere with the manifestation of the effect of the present invention.

For example, when the specific composition is used as a coating like the one used in making fried food, it may be used as it is in powder form as dredging flour which is directly applied to the surface of a food precursor or as a dredge mix which is applied to a food precursor having been coated with an aqueous liquid coating, such as beaten egg. The specific composition may be formulated into granules, which can be applied to a food precursor as dredging flour or a dredge mix as described above. The specific composition may be combined with a breadcrumb material to make a breader, which can be applied directly to a food precursor like a dredging flour or a food precursor coated with a liquid coating like a dredge mix. The specific composition in powder form can be converted to batter (a liquid coating), which is applied to a food precursor in a usual manner, and the resulting liquid-coated food precursor may further be coated with the above-mentioned breader containing the specific composition. As illustrated above, the pretreatment can be performed by applying the same coating containing the specific composition to a food precursor twice or more times to form multiple layers of the specific composition or by applying two or more different coatings each containing the specific composition to a food precursor in a predetermined order to form multiple layers of the specific composition.

When the food precursor to be pretreated is a granular food precursor (ground material), such as a hamburger steak (or Salisbury streak) patty, the granular food precursor is shaped into a patty, onto which the specific composition in powder or liquid form can be applied, or the specific composition in powder or liquid form may be kneaded into the granular food precursor, and the resulting mixture is shaped into a patty.

The specific composition in liquid form can be used like a familiar marinade or any other seasoning liquids. Specifically, the liquid specific composition may be sprinkled over a food precursor in a usual manner, well combined with or kneaded into the food precursor so that the composition may adhere uniformly all over the food precursor, or the liquid specific composition may be mixed with or kneaded into a food precursor, or a food precursor may be soaked in the liquid specific composition for several minutes to several hours.

The amount of the specific composition to be attached to a food precursor in the pretreatment is not particularly limited and is adjusted as appropriate according to the type of the food precursor, the method of cooking, and the like. Typically, it is preferably 0.1 to 60 parts, more preferably 0.1 to 30 parts, even more preferably 0.1 to 10 parts, by mass on solid basis per 100 parts by mass of the food precursor.

The thus pretreated food precursor is then heated by any cooking method that allows water to exude from the food precursor. The cooking method includes one or a combination of two or more of the conventional cooking methods selected according to the type of the food precursor and the cooking methods of the food precursor, such as frying, baking, and steaming.

The present invention is characterized in that a gelling prevention measure to prevent the alginic acid in the composition from gelling is performed after completion of the pretreatment and before the cooking is performed.

The main object of the present invention is to minimize the water loss of a food precursor caused by heating.

To accomplish this object, the aforementioned pretreatment is carried out on the food precursor prior to the heating to apply the composition containing the monovalent metal alginate and a slightly water-soluble divalent metal salt to the food precursor which is likely to exude water (drip) during heating. Upon heating, the alginic acid in the specific composition gels to form a film of gelled alginic acid around the food precursor. The gelled alginic acid film inhibits exudation of the drip from the food precursor and thereby minimizes water loss from the food precursor by heating.

The mechanism by which the gelled alginic acid film is formed is considered to be as follows. The divalent metal salt in the specific composition is typically insoluble in water in an alkaline range but soluble in an acidic range. Because the drip released from a food precursor during heating is generally acidic, the divalent metal salt attached to the food precursor dissolves upon contact with the drip. When the dissolved divalent metal salt comes into contact with the monovalent metal alginate of the specific composition, a gel forms to make a film covering the surface of the food precursor.

Thus, the intended effect of the present invention in minimizing the water loss of a food precursor caused by heating can be obtained only when the alginic acid adhering to the surface of the food precursor gels during heating to form a film of gelled alginic acid on the surface of the food precursor. However, a food precursor sometimes drips after the pretreatment and before the heating. If this drip causes the alginic acid to gel beyond a certain degree before heating, the gelled portion in the form of film will be removed from the food precursor by a relatively large amount of the drip released from the food precursor during heating. As a result, not only is the effect of the alginic acid film inadequate, but the appearance of the resulting cooked food may be affected by the removal of the gelled portion. The removal of the gelled portion (film) from the surface of the food precursor during heating occurs through the following mechanism. The drip exuded from the food precursor is blocked by the gelled portion (film) and accumulates between the food precursor and the film. When the drip builds up to a certain point, and the force pushing the film to the opposite side exceeds the strength of the film, it leaks out, pushing the film away from the food precursor. One conceivable approach to preventing such removal of the film from the food precursor during heating is to incorporate a proteinous substance that thermally coagulates into the specific composition. However, when this approach is adopted, since the proteinous substance coagulates with heat, coagulation in the specific composition containing the proteinous substance starts from the opposite side to the food precursor, i.e., the exterior side, so that the drip from the food precursor will be accumulated more in the food precursor side of the specific composition where coagulation begins relatively late. As a result, the texture of the resulting cooked food tends to be watery, too soft, or otherwise undesirable.

Then, the approach adopted in the present invention is to implement a gelling prevention measure to prevent the alginic acid present in the specific composition from gelling during the time period after completion of the pretreatment to before performing heating, thereby to control the gelling of the alginic acid so that it may occur substantially at the time of performing heating.

The gelling prevention measure includes all of measures A, B, and C:

- Measure A: Controlling the temperature of the food precursor immediately before applying the specific composition thereto in the pretreatment at or below 30°C, preferably 20°C or lower, more preferably 10°C or lower
- Measure B: Controlling the time in which the temperature of the pretreated food precursor is 40°C or higher, preferably 30°C or higher, more preferably 20°C or higher, so as not to be 2 hours or more, this time being hereinafter also referred to as the "food precursor high-temperature-hold time"
- Measure C: Controlling the time in which the temperature of the pretreated food precursor is in the range of from 10°C to 20°C, preferably from 0° to 10°C, more preferably from 0° to 4°C, so as not to be 12 hours or more, this time being hereinafter also referred to as the "food precursor medium-to-low-temperature-hold time"

As used herein, the term "the temperature of the food precursor" refers to the surface temperature of the food precursor. When a food precursor has different dimensions (e.g., lengths, diameters, etc.) in different directions, the term refers to the surface temperature of the central portion in the maximum length of the food precursor. For example, in the case of a spherical food precursor, the temperature at any surface point of the food precursor is the temperature of the food precursor. In the case of a food precursor with an oblong rectangular plan view shape, the surface temperature of the middle third of the food precursor equally divided into three in its maximum length (i.e., in the length direction of the rectangle) is the temperature of the food precursor.

With regard to measure B, if the food precursor high-temperature-hold time exceeds 2 hours, gelling will proceed substantially during the time between after completion of the pretreatment and before heating, tending to result in a failure to obtain the desired effect of the present invention. The food precursor high-temperature-hold time is preferably 2 hours or less, more preferably 90 minutes or less, even more preferably 1 hour or less. The shorter, the better.

From the same viewpoint, in the measure C, the food precursor medium-to-low-temperature-hold time is preferably 12 hours or less, more preferably 10 hours or less, even more preferably 8 hours or less. The shorter, the better.

When there is a plurality of food precursor high-temperature-hold times or a plurality of food precursor medium-to-low-temperature-hold times after the pretreatment and before heating, it is required that the total of the food precursor high-temperature-hold times or the food precursor medium-to-low-temperature-hold times be within the above-recited range.

Since gelling of alginic acid proceeds rapidly when the temperature of the pretreated food precursor is 40°C or higher, the food precursor high-temperature-hold time is preferably as short as possible as discussed. On the other hand, the progress of gelling of alginic acid at the food precursor temperature lower than 40°C is slower than at the food precursor temperature of 40°C or higher. Therefore, the gelling prevention measure that should be taken in the food precursor temperature range lower than 40°C can be different from the one that should be performed in the food precursor temperature range of 40°C and higher. In other words, in the food precursor temperature range lower than 40°C, the higher the food precursor temperature and the longer the time between after completion of the pretreatment and before heating (this time is hereinafter also referred to as the food precursor temperature-hold time), the more gelling of alginic acid proceeds. Therefore, in order to more reliably prevent gelling of alginic acid in the above temperature range, it is preferred that, when the food precursor temperature having been pretreated is lower than 40°C, the gelling prevention measure further includes controlling the product of the food precursor temperature and the food precursor temperature-hold time (the time from after completion of the pretreatment to before heating is performed), i.e., (the food precursor temperature (°C) below 40°C) × (the food precursor temperature-hold time (h)), to a relatively low value. The product of the food precursor temperature (below 40°C) and the food precursor temperature-hold time is preferably smaller than 220, more preferably smaller than 160, even more preferably smaller than 95, most preferably smaller than 80. It is preferred that the food precursor medium-to-low temperature-hold time in measure C be adjusted so that the product of the food precursor temperature (below 40°C) and the food precursor temperature-hold time may fall within the above-recited preferred range.

The gelling prevention measure preferably includes, as measure D, controlling the pH of the specific composition so as not to be in the acidic range during the time between after completion of the pretreatment and before performing heating. The pH of the specific composition during the time between after completion of the pretreatment and before heating is preferably 7 or higher, more preferably from 7.0 to 12.0. The pH of the specific composition is measured by combining 100 parts by mass of the specific composition to be analyzed with 300 parts by mass of water of pH 7, followed by stirring well to prepare a uniform dispersion and measuring the pH of the dispersion using a pH-test strip, the pH value being defined to be the pH of the specific composition.

Measure D can be implemented by, for example, preparing a specific composition having a pH in the alkaline range and beginning heating of the food precursor immediately after applying the specific composition to the food precursor, specifically such that the time between after completion of the pretreatment (immediately after attaching the specific composition to the food precursor) and before performing heating (immediately before the food precursor is heated) is within 30 minutes.

The gelling prevention measure preferably includes, as measure E, performing the pretreatment at an environmental temperature of 30°C or lower, more preferably 20°C or lower, and maintaining that environmental temperature until the start of heating. Measure E is preferred to measure D as a gelling prevention measure because it has less impact on the food precursor or the taste of the resulting cooked food.

The gelling prevention measure of the present invention may include one or more measures in addition to measures A to C.

Preferred examples of measure E include measures E1 and E2 below.

Measure E1: Storing the pretreated food precursor frozen until before heating is performed
Measure E2: Using a frozen food precursor as the food precursor to be pretreated with the specific composition

A preferred example of the gelling prevention measure of the present invention includes a combination of measures E1 and E2 in addition to measures A to C. Specifically, it is preferred to preliminarily freeze a food precursor that exudes water when heated, to pretreat the frozen food precursor with the specific composition, and to freeze-store the thus pretreated frozen food precursor until before performing heating.

The means for freezing the food precursor in measures E1 and E2 is not particularly limited and can be selected from freezing techniques known for food, including quick-freezing, such as air-blast freezing, brine freezing, and liquefied gas freezing; and slow-freezing. From the viewpoint of further ensuring the gelling prevention effect, quick-freezing is preferred. By "quick-freezing" is meant a freezing method in which a food is passed through a temperature zone of from -5° to -1°C, called the zone of maximum ice crystal formation, within 30 minutes.

Although it is ideal that the aforementioned gelling prevention measure successfully prevents the all alginic acid of the specific composition applied to the food precursor from gelling during the time period from after completion of the pretreatment to before heating is performed, gelling prevention to such an ideal level is not always required for producing a predetermined effect of the present invention. According to the inventors' findings, the predetermined effect of the present invention can be exerted when the non-gelling ratio measured by the method described below during the time period from after completion of the pretreatment to before performing heating is preferably 50% or higher, more preferably 60% or higher, even more preferably 70% or higher. In other words, gelation of less than 50% of the total area of the specific composition attached to the surface of a food precursor at the time immediately before heating is acceptable. Even when nearly 50% of the total area of the specific composition adhering to the surface of a food precursor has gelled by the time immediately before performing heating, the presence of the remaining 50% or so of the non-gelled portion can offset the adverse effect of the drip exuded from the food precursor during heating. As a result, the inconveniences caused by the removal of the alginic acid film from the food precursor are substantially prevented from occurring.

Method for determining non-gelling ratio

A food precursor after the pretreatment, i.e., a food precursor having the composition applied thereto and not having been heated is used as a sample. The surface of the sample is washed with neutral running water to wash away the non-gelled portions of the composition from the surface, leaving the gelled portions attached to the surface. The total area of the composition remaining on the surface of the sample (gelled portions) is measured, from which a non-gelling ratio is calculated by formula:

$$\text{Non-gelling ratio } (\%) = \{(\text{surface area of sample} - \text{total area of gelled portions})/\text{surface area of sample}\} \times 100$$

The surface area of the sample is determined through the following procedure: Firstly, the maximum length of the sample is measured along each of its three-dimensional axes. Subsequently, the minimum surface area of an imaginary rectangular parallelepiped with dimensions equal to those measured along the three-dimensional axes is calculated. In simpler terms, the rectangular parallelepiped is the smallest box capable of fully enclose the sample. The surface area of the sample is then defined as being equal to the surface area of this minimal box. The three-dimensional axes are three directions perpendicular to each other, such as the longitudinal, transverse, and height directions.

The total area of gelled portions is determined as follows. Firstly, the maximum length of the sample (gelled portions) is measured along each of its two-dimensional axes. Then, the minimum area of an imaginary quadrangle with dimensions equal to those measured in the two-dimensional axes is calculated. In other words, the quadrangle is the smallest box capable of fully enclosing the sample. The total area of gelled portions is defined as being equal to the area of this minimal box.

The present invention is applicable to all heated foods (foods produced through heating of food precursors), including hamburger steaks, potstickers, Japanese croquettes (also known as korokke), floured fried foods, nuggets, and tempura. The present invention is particularly beneficial when applied to heated foods prepared from food precursors with significant concerns regarding water loss caused by heating. Such foods include those made of the above-described granular animal or vegetable food precursors and cooked by frying or baking. In particular, the present invention is suited to produce breaded deep-fried foods, fritters, tempera, nuggets, and floured deep-fried foods, especially breaded deep-fried foods.

Example

The present invention will now be illustrated in greater detail with reference to Examples, but it should be understood that the present invention is not deemed to be limited thereto. Unless otherwise specified, all the parts are by mass.

Examples 1 to 3 and Comparative Examples 1 to 4 - Production of chicken nuggets

The components shown in Table 2 below were blended to prepare a composition that was in powder form at ambient temperature and pressure. A hundred parts of the composition was mixed with 200 parts of water to prepare batter A (liquid composition). Separately, 100 parts of wheat flour was mixed with 150 parts of water to prepare batter B.

Chicken nuggets were made using chicken breast as an animal ingredient and each of batter A and batter B according to the following cooking methods A, B, or C.

Method A: Pretreatment with liquid composition → heating

Chicken breast was ground in a blender together with potato starch. The ground meat was seasoned with salt, pepper, and mayonnaise and shaped into oval patties (food precursors) each weighing 50 g. The patties were each dipped in batter A kept at 25°C to attach 10 g (3 g on solid basis) of batter A per patty (pretreatment step). Each battered patty was dredged in wheat flour, dipped in batter B, and immediately thereafter deep-fried in oil at 170°C for 1.5 minutes (heating step) to make chicken nuggets.

According to the above cooking procedure, the temperature of the food precursor before battering in the pretreatment (i.e., nugget patty) was 25°C; the time in which the temperature of the pretreated food precursor was 40°C or higher was almost zero; and the time in which the temperature of the pretreated food precursor was in the range of from 10°C to 20°C was almost zero. That is, method A for producing a heated food involves measures A to C. As used herein, the term "almost zero" includes the inevitable time required to perform a treatment process, and typically refers to 3 minutes (0.05 hour) or less. In method A, the product of the food precursor temperature (°C) immediately after completion of the pretreatment (below 40°C) and the food precursor temperature-hold time (h) was 25°C × 0.01 h = 0.25.

Method B: Pretreatment with liquid composition → cold- or frozen-storing → heating

Nugget patties were made and coated with batter A, wheat flour, and batter B in this order (pretreatment step) in the same manner as described above. The thus pretreated patties were placed on a plate, covered with cling-wrap, and stored in a refrigerator at 4°C or a freezer at -18°C for 24 hours. The cold- or frozen-stored patties were deep-fried in oil at 170°C for 2 to 2.5 minutes (heating step) to make chicken nuggets.

According to the above cooking procedure, the temperature of the food precursor (i.e., nugget patty) before battering in the pretreatment was 25°C; the time in which the temperature of the pretreated food precursor was 40°C or higher was almost zero; and the time in which the temperature of the pretreated food precursor was in the range of from 10°C to 20°C was almost zero. That is, method B for producing a heated food involves measures A to C. In method B, the product of the food precursor temperature (°C) immediately after completion of the pretreatment (below 40°C) and the food precursor temperature-hold time (h) was -18°C × 24 h = -432.

Method C: Freezing of food precursor → pretreatment with liquid composition → frozen storage → heating

Nugget patties were made in the same manner as in method A. The patties were stored in a freezer at -18°C for 24 hours. The frozen patties (frozen food precursors) were each coated with 10 g of batter A (pretreatment step) and dredged in wheat flour. The coated patties were placed in a plate, covered with cling-wrap, and stored in a freezer at -18°C for 24 hours. The frozen patties were each coated with batter B and deep-fried in oil at 170°C for 2 to 2.5 minutes (heating step) to make chicken nuggets.

In method C, the temperature of the food precursor (i.e., nugget patty) immediately before battering in the pretreatment was -18°C; the time in which the temperature of the pretreated food precursor was 40°C or higher was almost zero; and the time in which the temperature of the pretreated food precursor was in the range of from 10°C to 20°C was almost zero. That is, method C for producing a heated food involves measures A to C. The product of the food precursor temperature (°C) immediately after completion of the pretreatment (below 40°C) and the food precursor temperature-hold time (h) was -18°C × 24 h = -432.

Examples 4 and 5 and Comparative Examples 5 to 7 - Production of chicken nuggets

The components shown in Table 3 were blended to prepare a composition that was in powder form at ambient temperature and pressure. Chicken nuggets were made using chicken breast as an animal ingredient and each of the powder compositions of Examples and Comparative Examples according to the following cooking methods D to G.

Metod D: Pretreatment with powder composition → heating

Nugget patties were prepared in the same manner as in method A. The nugget patties were each dredged in the powder composition to attach 5 g of the composition per patty (pretreatment step) and, immediately thereafter, deep-fried in oil at 170°C for 1.5 minutes (heating step) to make chicken nuggets.

In method D, the temperature of the food precursor (i.e., nugget patty) before applying the powder composition in the pretreatment was 25°C; the time in which the temperature of the pretreated food precursor was 40°C or higher was almost zero; and the time in which the temperature of the pretreated food precursor was in the range of from 10°C to 20°C was almost zero. That is, method D for producing a heated food involves measures A to C. The product of the food precursor temperature (°C) immediately after completion of the pretreatment (below 40°C) and the food precursor temperature-hold time (h) was 24°C × 0.01 h = 0.24.

Method E: Pretreatment with powder composition → heating

Nugget patties were prepared in the same manner as in method A. The nugget patties were heated to 60°C (food precursor temperature), each dredged in the powder composition to attach 5 g of the composition per patty (pretreatment step), dipped in batter B, and, immediately thereafter, deep-fried in oil at 170°C for 1.5 minutes (heating step) to make chicken nuggets.

In method E, the temperature of the food precursor (i.e., nugget patty) immediately before applying the powder composition in the pretreatment was 60°C; the time in which the temperature of the pretreated food precursor was 40°C or higher was almost zero; and the time in which the temperature of the pretreated food precursor was in the range of from 10°C to 20°C was almost zero. That is, method E for producing a heated food does not involve measure A. The product of the food precursor temperature (°C) immediately after completion of the pretreatment (below 40°C) and the food precursor temperature-hold time (h) was 60°C × 0.01 h = 0.6.

Method F: Pretreatment with powder composition → heating

Nugget patties were prepared in the same manner as in method A. The patties were each dredged in the powder composition to attach 5 g of the composition per patty (pretreatment step). The pretreated patties were heated to 40°C (food precursor temperature), at which they were maintained for 2 hours. The patties were each dipped in batter B and deep-fried in oil at 170°C for 1.5 minutes (heating step) to make chicken nuggets.

In method F, the temperature of the food precursor (i.e., nugget patty) immediately before applying the powder composition in the pretreatment was 25°C; the time in which the temperature of the pretreated food precursor was 40°C or higher was 2 hours; and the time in which the temperature of the pretreated food precursor was in the range of from 10°C to 20°C was almost zero. That is, method F for producing a heated food does not involve measure B. The product of the food precursor temperature (°C) immediately after completion of the pretreatment (below 40°C) and the food precursor temperature-hold time (h) was 40°C × 2 h = 80.

Method G: Pretreatment with powder composition → heating

Nugget patties were prepared in the same manner as in method A. The patties were each dredged in the powder composition to attach 5 g of the composition per patty (pretreatment step). The pretreated patties were left to stand in an environment of 20°C for 12 hours. Then, the patties were each dipped in batter B and deep-fried in oil at 170°C for 1.5 minutes (heating step) to make chicken nuggets.

In method G, the temperature of the food precursor (i.e., nugget patty) immediately before applying the powder composition in the pretreatment was 25°C; the time in which the temperature of the pretreated food precursor was 40°C or higher was almost zero; and the time in which the temperature of the pretreated food precursor was in the range of from 10°C to 20°C was 12 hours. That is, method G for producing a heated food does not involve measure C. The product of the food precursor temperature (°C) immediately after completion of the pretreatment (below 40°C) and the food precursor temperature-hold time (h) was 20°C × 12 h = 240.

Evaluation Test 1

The chicken nuggets prepared in Examples and Comparative Examples were visually observed and eaten by a panel of 10 experts immediately after the preparation (immediately after deep-frying) and rated for appearance and texture according to the following criteria. The arithmetic means of the ratings given by the 10 experts are shown in Tables 2 and 3.

In Examples 4 and 5 and Comparative Examples 5 to 7, the non-gelling ratio was determined by the method described above using the food precursor after the pretreatment and before the heating as a sample. The results obtained are shown in Table 3.

Criteria for rating appearance of chicken nugget:

- A: No fall-off of the coating
- B: Gap formed in part between the coating and the patty, or crack formed in part of the coating
- C: Fall-off of the coating is observed.

Criteria for rating texture of patty:

    5: Very tender and very succulent (very good)

4: Tender and succulent (good)

3: Tender but slightly dry

2: Slightly firm and dry (poor)

1: Firm and excessively dry (very poor)

Table 2

| | | | Example | | | Comparative Example | | | |
|---|---|---|---|---|---|---|---|---|---|
| | | | 1 | 2 | 3 | 1 | 2 | 3 | 4 |
| Composition (mass%) | Monovalent Metal Alginate | Sodium Alginate | 1 | 1 | 1 | 1 | 1 | - | - |
| | Propylene Glycol Alginate | | - | - | - | - | - | - | 1 |
| | Divalent Metal Salt | Calcium Carbonate*1 | 1 | - | - | - | - | 2 | 1 |
| | | Tricalcium Phosphate*1 | - | 1 | - | - | - | - | - |
| | | Calcium Hydroxide*1 | - | - | 1 | - | - | - | - |
| | | Calcium Chloride*2 | - | - | - | - | 1 | - | - |
| | Wheat Flor | | bal. | bal. | bal. | bal. | bal. | bal. | bal. |
| | Total | | 100 | 100 | 100 | 100 | 100 | 100 | 100 |
| Amount of Composition Attached (on solid basis) per 100 parts of Food Precursor | | | 8 | 8 | 8 | 8 | 8 | 8 | 8 |
| Rating of Chicken Nugget (5-point scale) | Method A*3 | Appearance | A | A | A | B | B | B | C |
| | Method A*3 | Texture | 4.4 | 4.3 | 3.9 | 1.7 | 1.6 | 1.4 | 2.2 |
| | Method B*3 (cold Storage) | Texture | 3.9 | 3.7 | 3.3 | 1.9 | 1.6 | 1.3 | 2.2 |
| | Method B*3 (frozen Storage) | Texture | 4.6 | 4.5 | 4.3 | 2.3 | 2.1 | 1.6 | 2.3 |
| | Method C*3 | Texture | 4.7 | 4.6 | 4.4 | 2.3 | 2.2 | 1.7 | 2.3 |

*1: Slightly water-soluble *2: Water-soluble *3: Gelling prevention measure was performed.

All the cooking methods adopted in Examples and Comparative Examples in Table 2 involve the gelling prevention measure (including measures A to C). As can be seen from Table 2, the chicken nuggets prepared in Examples, in which the food precursor (nugget patty) was pretreated with a composition containing the monovalent metal alginate and the slightly water-soluble divalent metal salt, were superior in both appearance and texture to those of Comparative Examples, in which the above requirement was not satisfied.

Comparing the results of the different cooking methods in each Example, with the specific composition being equal, the following common trend can be seen among Examples. In method B (cold storage), where the pretreatment is followed by cold storage followed by heating, the nuggets were rated lower than those prepared by method A, where the pretreated food precursor was heated immediately. On the other hand, the nuggets prepared by method B (frozen storage), where the pretreatment is followed by frozen storage followed by heating, were rated higher than those prepared by method A.

Table 3

| | | | Example | | Comparative Example | | |
|---|---|---|---|---|---|---|---|
| | | | 4 | 5 | 5 | 6 | 7 |
| Composition (mass%) | Monovalent Metal Alginate | Sodium Alginate | 1 | 1 | 1 | 1 | 1 |
| | Divalent Metal Salt | Calcium Carbonate *1 | 1 | - | 1 | 1 | 1 |
| | | Tricalcium Phosphate*1 | - | 1 | - | - | - |
| | Wheat Flour | | balance | balance | balance | balance | Balance |
| | Total | | 100 | 100 | 100 | 100 | 100 |
| Amount of Composition Attached (on solid basis) per 100 parts of Food precursor | | | 5 | 5 | 5 | 5 | 5 |
| Cooking Method | | | D*2 | DT*2 | E*3 | F'' | G*3 |
| Rating of Chicken Nuggets (5-point scale) | | Appearance | A | A | C | C | B |
| | | Texture | 4.5 | 4.4 | 3.1 | 2.2 | 2.3 |
| | | Non-gelling Ratio (%) | 98 | 94 | 49 | 12 | 9 |
| *2: Slightly water-soluble
*2: Gelling prevention measure was performed.
*3: Gelling prevention measure was not performed. | | | | | | | |

As demonstrated in Table 3, the chicken nuggets of Examples, where the gelling prevention measure, including all of measures A to C, was performed, had higher non-gelling ratios and were superior in appearance and texture as compared with those of Comparative Examples in which the gelling prevention measure was not taken.

Separately, in an attempt to make chicken nuggets, method A was followed except that the temperature of batter A was 40°C. However, part of batter A gelled and solidified while the nugget patties were successively dipped in it. As a result, the patty was not coated with a sufficient amount of batter A to provide a chicken nugget. It can be said from this that the temperature of the liquid composition to be applied to a food precursor in the pretreatment is preferably not higher than 30°C, more preferably 20°C or lower, even more preferably 10°C or lower. This clearly verifies the effectiveness of measure A.

Examples 6 to 8 and Comparative Examples 8 to 11 - Production of Hamburg Steaks

The components shown in Table 4 were blended to prepare a composition that was in powder form at ambient temperature and pressure. Hamburger steaks were made using ground beef and pork (ground animal ingredient) and sauteed chopped onion (minced plant ingredient) according to the following cooking method H or I.

Method H: Pretreatment with powder composition → heating

Ground beef and pork, sauteed chopped onion, breadcrumbs, milk, and seasonings were mixed. A hundred parts of the meat mixture was combined with 10 parts of the powder composition (pretreatment step), and the mixture was shaped into hamburger steak patties. The patties were immediately pan-fried with oil for 4 minutes and flipped over to cook the other side for 5 minutes (heating step) to make hamburger steaks.

In method H, the temperature of the food precursor immediately before applying the powder composition in the pretreatment (i.e., meat mixture) was 25°C; the time in which the temperature of the pretreated food precursor was 40°C or higher was almost zero; and the time in which the temperature of the pretreated food precursor was in the range of from 10°C to 20°C was almost zero. That is, method H for producing a heated food involves measures A to C. The product of the food precursor temperature (°C) immediately after completion of the pretreatment (below 40°C) and the food precursor temperature-hold time (h) was 25°C × 0.01 h = 0.25.

Method I: Pretreatment with powder composition → cold- or frozen-storing → heating

Hamburger steak patties were prepared in the same manner as in method H. The patties were put on a plate, covered with cling-wrap, and stored in a refrigerator at 4°C or a freezer at -18°C for 24 hours. Immediately after the patties were taken out of the refrigerator or freezer, they were pan-fried with oil for 4 minutes and flipped over to cook the other side for 5 minutes (heating step) to make hamburger steaks.

In method I, the temperature of the food precursor immediately before applying the powder composition in the pretreatment (i.e., the meat mixture) was 25°C; the time in which the temperature of the pretreated food precursor was 40°C or higher was almost zero; and the time in which the temperature of the pretreated food precursor was in the range of from 10°C to 20°C was almost zero. That is, method I involved measures A to C. The product of the food precursor temperature (°C) immediately after completion of the pretreatment (below 40°C) and the food precursor temperature-hold time (h) was 4°C × 24 h = 96 or -18°C × 24 h = -432.

Evaluation Test 2

The hamburger stakes prepared in Examples and Comparative Examples were eaten by a panel of 10 experts immediately after the preparation (pan-frying) and rated for texture according to the following criteria. The arithmetic means of the ratings given by the 10 experts are shown in Table 4.

Criteria for rating texture of hamburger steak:

5: Very good - A lot of juices overflow upon putting a knife in it. It is fluffy and super tender.
4: Good - Juices overflow upon putting a knife in it. It is fluffy and tender.
3: Juicy and slightly tender
2: Poor - Little juices and slightly tough texture
1: Very poor - Very little juices and tough texture

Table 4

| | | | Example | | | Comparative Example | | | |
|---|---|---|---|---|---|---|---|---|---|
| | | | 6 | 7 | 8 | 8 | 9 | 10 | 11 |
| Composition (mass%) | Monovalent Metal Alginate | Sodium Alginate | 1 | 1 | 1 | 1 | 1 | - | - |
| | Propylene Glycol Alginate | | - | - | - | - | - | - | 1 |
| | Divalent Metal Salt | Calcium Carbonate *1 | 1 | - | - | - | - | 2 | 1 |
| | | Tricalcium Phosphate*1 | - | 1 | - | - | - | - | - |
| | | Calcium Hydroxide*1 | - | - | 1 | - | - | - | - |
| | | Calcium Chloride*2 | - | - | - | - | 1 | - | - |
| | Wheat Flor | | bal. | bal. | bal. | bal. | bal. | bal. | bal. |
| | Total | | 100 | 100 | 100 | 100 | 100 | 100 | 100 |
| Amount of Composition Attached to Food precursor (on solid basis) per 100 parts of Food precursor | | | 10 | 10 | 10 | 10 | 10 | 10 | 10 |

(continued)

|  |  |  | Example | | | Comparative Example | | | |
|---|---|---|---|---|---|---|---|---|---|
|  |  |  | 6 | 7 | 8 | 8 | 9 | 10 | 11 |
| Rating of Hamburger Steak (5-point scale) | Method H[*3] | Texture | 4.6 | 4.3 | 4.0 | 2.4 | 2.3 | 1.8 | 2.0 |
|  | Method I[3] (cold storage) | Texture | 4.0 | 3.7 | 3.2 | 2.3 | 1.9 | 1.9 | 2.1 |
|  | Method I[*3] (frozen storage) | Texture | 4.8 | 4.6 | 4.2 | 2.7 | 2.5 | 1.7 | 2.3 |
| *1: Slightly water-soluble | | | | | | | | | |
| *2: Water-soluble | | | | | | | | | |
| *3: Gelling prevention measure was performed. | | | | | | | | | |

All the cooking methods adopted in Examples and Comparative Examples in Table 4 involve the gelling prevention measure (including measures A to C). As can be seen from Table 4, the hamburger steaks prepared in Examples, in which the food precursor (meat mixture) was pretreated with a composition containing the monovalent metal alginate and the slightly water-soluble divalent metal salt, were superior in texture to those of Comparative Examples, in which the above requirement was not satisfied.

Comparing the results of the different cooking methods, with the specific composition being equal, in each Example, the following common trend can be seen among Examples. In method I (cold storage), where the pretreatment is followed by cold storage followed by heating, the hamburger steaks were rated lower than those prepared by method H, where the pretreated food precursor was heated immediately. On the other hand, the hamburger steaks prepared by method I (frozen storage), where the pretreatment is followed by frozen storage followed by heating, were rated higher than those prepared by method H.

Industrial Applicability

The present invention provides a technique for producing a heated food with a juicy texture while minimizing water loss of the food by heating.

## Claims

1. A method for producing a heated food comprising pretreating a food precursor susceptible to water exudation on heating by applying a composition containing a monovalent metal salt of alginic acid and a slightly water-soluble divalent metal salt to the food precursor, heating the pretreated food precursor, and performing a gelling prevention measure to prevent the alginic acid in the composition from gelling after completion of the pretreatment and before performing the heating,

   the gelling prevention measure comprising controlling the temperature of the food precursor immediately before applying the composition thereto in the pretreatment at or below 30°C, controlling the time in which the temperature of the pretreated food precursor is 40°C or higher so as not to be 2 hours or more, and controlling the time in which the temperature of the pretreated food precursor is in the range of from 10°C to 20°C so as not to be 12 hours or more.

2. The method according to claim 1, wherein the gelling prevention measure further comprises storing the pretreated food precursor frozen until before the heating is performed.

3. The method according to claim 1 or 2, wherein the gelling prevention measure further comprises using a frozen food precursor as the food precursor to be pretreated.

4. The method according to any one of claims 1 to 3, wherein the gelling prevention measure further comprises controlling the product of the temperature of the pretreated food precursor and the time from after completion of the pretreatment to before performing the heating to less than 220 when the temperature of the pretreated food precursor is lower than 40°C.

5. The method according to any one of claims 1 to 4, wherein the composition is in powder or liquid form when it is applied to the food precursor.

6. The method according to any one of claims 1 to 5, wherein the divalent metal salt has a water solubility of 0.1 g/100 g water or less in water at pH 7.0 and 20°C.

## INTERNATIONAL SEARCH REPORT

| International application No. |
|---|
| PCT/JP2021/022722 |

**A. CLASSIFICATION OF SUBJECT MATTER**
A23L 5/10(2016.01)i; A23L 7/157(2016.01)i; A23L 29/256(2016.01)i
FI: A23L5/10 E; A23L7/157; A23L29/256

According to International Patent Classification (IPC) or to both national classification and IPC

**B. FIELDS SEARCHED**

Minimum documentation searched (classification system followed by classification symbols)
A23L5/10; A23L7/157; A23L29/256

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y<br><br>A | JP 2019-195292 A (NISSHIN FOODS KK) 14 November 2019 (2019-11-14) paragraphs [0029]-[0030], [0032]-[0037], tables 2-5<br>paragraph [0027] | 1, 3-6<br>3-6<br><br>2 |
| Y<br>A | JP 62-181767 A (NIPPON SUISAN KAISHA LTD) 10 August 1987 (1987-08-10) page 2, lower left column, paragraph [0002], page 7, upper left column, paragraph [0003] | 3-6<br>3-6 |
| A | JP 51-16932 B2 (SAN-EI CHEMICAL INDUSTRIES LTD.) 28 May 1976 (1976-05-28) entire text | 1-6 |
| A | JP 2015-23861 A (SANEI GEN FFI INC) 05 February 2015 (2015-02-05) entire text | 1-6 |
| A | WO 2019/216361 A1 (NISSHIN FOODS INC) 14 November 2019 (2019-11-14) entire text | 1-6 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 August 2021 (10.08.2021) | 24 August 2021 (24.08.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2021/022722

C (Continuation). DOCUMENTS CONSIDERED TO BE RELEVANT

| Category* | Citation of document, with indication, where appropriate, of the relevant passages | Relevant to claim No. |
|---|---|---|
| A | CN 104489467 A (QINGDAO BRIGHT MOON SEAWEED GROUP CO., LTD) 08 April 2015 (2015-04-08) entire text | 1-6 |

Form PCT/ISA/210 (continuation of second sheet) (January 2015)

**INTERNATIONAL SEARCH REPORT**
Information on patent family members

| International application No. |
|---|
| PCT/JP2021/022722 |

| Patent Documents referred in the Report | Publication Date | Patent Family | Publication Date |
|---|---|---|---|
| JP 2019-195292 A | 14 Nov. 2019 | (Family: none) | |
| JP 62-181767 A | 10 Aug. 1987 | (Family: none) | |
| JP 51-16932 B2 | 28 May 1976 | (Family: none) | |
| JP 2015-23861 A | 05 Feb. 2015 | (Family: none) | |
| WO 2019/216361 A1 | 14 Nov. 2019 | (Family: none) | |
| CN 104489467 A | 08 Apr. 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015023861 A
- JP 2015023846 A
- JP 2019195292 A